(19) Europäisches Patentamt
European Patent Office
Office européen des brevets

(11) **EP 4 676 046 A1**

(12) **EUROPEAN PATENT APPLICATION**

(43) Date of publication:
**07.01.2026 Bulletin 2026/02**

(21) Application number: **24315324.4**

(22) Date of filing: **04.07.2024**

(51) International Patent Classification (IPC):
*H04N 19/12* (2014.01)   *H04N 19/157* (2014.01)
*H04N 19/176* (2014.01)   *H04N 19/46* (2014.01)
*H04N 19/61* (2014.01)   *H04N 19/70* (2014.01)

(52) Cooperative Patent Classification (CPC):
H04N 19/176; H04N 19/12; H04N 19/157;
H04N 19/46; H04N 19/61; H04N 19/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing 100085 (CN)**

(72) Inventors:
• **Abdoli, Mohsen
Beijing, 100085 (CN)**
• **Tissier, Alexandre
Beijing, 100085 (CN)**
• **Ghaznavi Youvalari, Ramin
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS MUTUALLY EXCLUDING USE OF TRANSFORM-BASED DISTORTION METRIC AND TRANSFORM-LESS RESIDUAL CODING**

(57)   A method of processing one or more blocks of a picture is described. The method includes mutually excluding for at least one of the one or more blocks a use of a transform-based distortion metric and a transform-less residual coding.

Mutually excluding for at least one of the one or more blocks a use of a transform-based distortion metric and a transform-less residual coding — S100

Fig. 7

PF2404262EP – final

## Description

### Technical Field

The present disclosure generally relates to the field of encoding/decoding pictures, images or videos, more specifically to the use of a transform-based distortion metric and a transform-less residual coding. Embodiments of the present disclosure concern a mutual exclusion of a use of a transform-based distortion metric and a transform-less residual coding.

### Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

For encoding and decoding of a picture, processing one or more blocks of a picture may include the use of a transform-based distortion metric and a transform-less residual coding.

Thus, there is a need to provide further improvements for processing one or more blocks of a picture that may be applied for encoding and decoding of a picture, an image or a video.

### Summary

The present disclosure provides a method of processing one or more blocks of a picture, the method comprising: mutually excluding for at least one of the one or more blocks a use of a transformbased distortion metric and a transform-less residual coding.

Optionally,

- the use of the transform-based distortion metric is disallowed when the transform-less residual coding is used for the at least one block, or
- the use of the transform-less residual coding is disallowed when the transform-based distortion metric is used for the at least one block.

Optionally, the mutual exclusion of the transform-based distortion metric and the transform-less residual coding is

- determined implicitly, e.g., by a decoder, and/or
- signaled, e.g., transmitted by an encoder and received at a decoder.

Optionally,

it is determined implicitly whether the transform-less residual coding is used,
the transform-based distortion metric is not used, when it is determined that the transform-less residual coding is used, and
the transform-based distortion metric is used, when it is determined that the transform-less residual coding is not used, or
it is determined implicitly whether the transform-based distortion metric is used, the transform-less residual coding is not used, when it is determined that the transform-based distortion metric is used, and
the transform-less residual coding is used, when it is determined that the transform-based distortion metric is not used.

Optionally, the signaling uses one or more signals, e.g., one or more bits or one or more flags, for indicating one or more of the following:

- the mutual exclusion of the transform-based distortion metric and the transform-less residual coding,
- the use of the transform-based distortion metric and the non-use of the transform-less residual coding,
- the non-use of the transform-based distortion metric and the use of the transform-less residual coding,
- the use of the transform-based distortion metric, wherein the non-use of the transform-less residual coding is determined implicitly,
- the non-use of the transform-based distortion metric, wherein the use of the transform-less residual coding is determined implicitly,

- the use of the transform-less residual coding, wherein the non-use of the transform-based distortion metric is determined implicitly,
- the non-use of the transform-less residual coding, wherein the use of the transform-based distortion metric is determined implicitly.

Optionally,

the use of the transform-based distortion metric is signaled for the at least one block explicitly in a data stream using a first flag, and/or the use of the transform-less residual coding is signaled for the at least one block explicitly in the data stream using a second flag,
the first flag has a first value or a second value, wherein the first value indicates that the transform-based distortion metric is used and the second value indicates that the transform-based distortion metric is not used, and
the second flag has a first value or a second value, wherein the first value indicates that the transform-less residual coding is used and the second value indicates that the transform-less residual coding is not used.

Optionally,

the first flag is signaled, wherein

(a) the transform-less residual coding is not used when to the first flag has the first value, and
(b) the transform-less residual coding is used when to the first flag has the second value, or

the second flag is signaled, wherein

(a) the transform-based distortion metric is not used when to the second flag has the first value, and
(b) the transform-based distortion metric is used when to the second flag has the second value.

Optionally,

among the first and second flags, the first flag or a certain distortion metric is signaled first for the at least one block, and, when the first flag has the first value or the certain distortion metric is a transform-based distortion metric, the second flag is not signaled in the data stream and is implicitly derived to have the second value, or
among the first and second flags, the second flag is signaled first for the at least one block, and, when the second flag has the first value,

- the first flag is not signaled in the data stream and a value of the first flag is implicitly derived to have the second value, or
- a predefined non-transform-based distortion metric is used.

Optionally,

among the first and second flags, the first flag is signaled first for the at least one block, and, when the first flag has the first value, a signaling of the second flag is modified so as to indicate one or more non-transform-less residual codings to be used, or
among the first and second flags, the second flag is signaled first for the at least one block, and, when the second flag has the first value, a signaling of the first flag is modified so as to indicate one or more non-transform-based distortion metrics to be used.

Optionally, when the transform-based distortion metric and the transform-less residual coding are signaled explicitly, a choice of a context adaptive binary arithmetic coding, CABAC, context for signaling of each of the transform-based distortion metric and the transform-less residual coding is such that

when the explicit signaling of the transform-based distortion metric takes place before the signaling of the transform-less residual-coding, the CABAC context selection of the transform-less residual coding depends on a choice of transform-based distortion metric, and
when the explicit signaling of the transform-based distortion metric takes place after the signaling of the transform-less residual-coding, the CABAC context selection of the transform-based distortion metric depends on a choice of the transform-less residual coding.

Optionally, mutually excluding the use of the transform-based distortion metric and the transform-less residual coding is applied during a block vector, BV, or motion vector, MV, refinement process.

Optionally, the BV or MV refinement process comprises:

re-ordering, for the at least one block, a list of BV or MV candidates, wherein, when the transform-less residual coding is used for the at least one block, no transform-based distortion metric is used for implementing the re-ordering.

The present disclosure provides a non-transitory computer-readable storage medium comprising instructions which, when executed by a computer, cause the computer to carry out the method according to the present disclosure.

The present disclosure provides an apparatus of processing one or more blocks of a picture, the apparatus comprising:

a processing module configured to mutually exclude for at least one of the one or more blocks a use of a transform-based distortion metric and a transform-less residual coding.

The present disclosure provides a data stream having encoded thereinto a picture, wherein the data stream comprises:

a signaling indicating a mutually exclusion of the use of the transform-based distortion metric and the transform-less residual coding.

The technical solutions provided according to embodiments of the present disclosure have the following beneficial effects.

In prior art approaches, e.g., in the current design of ECM, the process of choosing a cost metric (e.g. template cost) does not take into account whether the residual is transform-coded or not. In particular, when the residual is not transform-coded (e.g., a Transform Skip is used), the cost metric during the prediction may still be based on a transform-based distortion metric (e.g. SATD). Embodiments of the present disclosure addresses drawbacks in the prior art by providing approaches for processing one or more blocks of a picture which mutually exclude of a use of a transform-based distortion metric and a transform-less residual coding.

It is to be understood that the content described in this section is not intended to identify key or critical features of embodiments of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

| | |
|---|---|
| Fig. 1 | is a block diagram of a conventional video encoder; |
| Fig. 2 | is a block diagram of a conventional video decoder; |
| Fig. 3 | illustrates template-based intra mode derivation (TIMD) templates for a cost determination or calculation; |
| Fig. 4(A) to Fig. 4(D) | illustrate a current CTU processing order and its available reference samples in a current CTU and a left CTU for an Intra block copy (IBC) mode; |
| Fig. 5 | illustrate an intra template matching search area for the Intra template matching prediction (IntraTMP) mode; |
| Fig. 6 | illustrates the use of an IntraTMP block vector for an IBC block; |
| Fig. 7 | illustrates a flow diagram of a method of processing one or more blocks of a picture in accordance with embodiments of the present disclosure; |
| Fig. 8 | illustrates a flow diagram of a method of processing one or more blocks of a picture in accordance with further embodiments of the present disclosure; |
| Fig. 9 | illustrates a flow diagram of an embodiment for parsing a TS flag dependent on a choice of a distortion metric; |
| Fig. 10 | illustrates a flow diagram of an embodiment for parsing a distortion metric, like a SATD flag, dependent on a choice of a residual coding; |
| Fig. 11 | illustrates a template-based re-ordering of IBC BV candidates in accordance with an embodiment; |
| Fig. 12 | illustrates a flow diagram of a method for decoding an encoded data stream, the encoded data stream including data representing a picture, in accordance with an embodiment; |
| Fig. 13 | illustrates a flow diagram of a method for encoding a picture into an encoded data stream, in accordance with an embodiment; |
| Fig. 14 | illustrates a block diagram of an apparatus of processing one or more blocks of a picture in accordance with an embodiment of the present disclosure; |
| Fig. 15 | illustrates a block diagram of a decoder for decoding an encoded data stream in accordance |

with embodiments of the present disclosure;

Fig. 16          illustrates a block diagram of an encoder for encoding a picture into an encoded data stream in accordance with embodiments of the present disclosure;

Fig. 17          illustrates a data stream in accordance with embodiments of the present disclosure; and

Fig. 18          illustrates a block diagram illustrating an electronic device according to embodiments of the present disclosure.

## Detailed Description

Illustrative embodiments of the present disclosure are described below with reference to the drawings, where various details of embodiments of the present disclosure are included to facilitate understanding and are to be considered as illustrative only. Accordingly, those of ordinary skill in the art recognize that various changes and modifications of embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Encoder

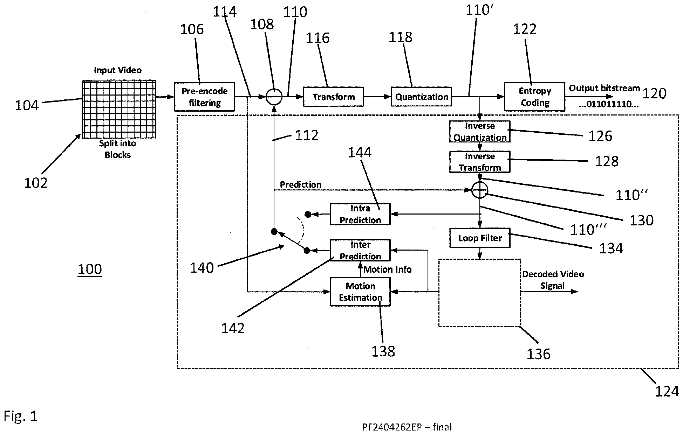

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110''' that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110'''. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

Decoder

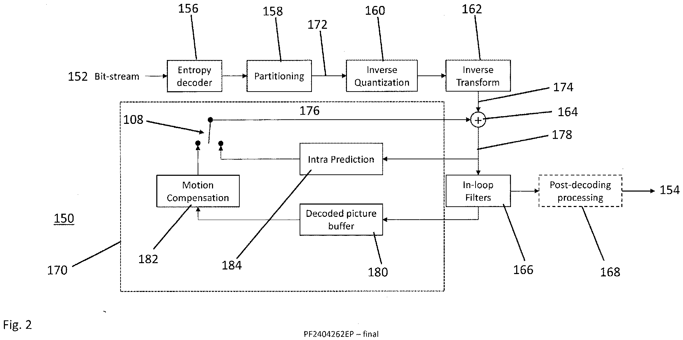

Fig. 2 is a block diagram of a video decoder 150 for predictively decoding from a data or bit stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units (CTUs), typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Related Intra Prediction Tools in JVET

*Transform Skip (TS)*

Transform Skip (TS) is a technique used in video coding standards, like HEVC and VVC, to improve compression efficiency by skipping the transform stage for certain prediction modes. In traditional video coding, each block of pixels undergoes a transform operation (e.g. DCT) before quantization and entropy coding. However, in TS mode, the transform stage, like transformer 116 in Fig. 1, is bypassed for specific prediction modes, allowing the encoder to directly quantize the residual signal 110 without transformation. This approach is beneficial for blocks where the residual signal after prediction is small or close to zero, as applying a transform may not yield significant compression gains and can introduce unnecessary computational overhead. By skipping the transform, the encoder can reduce complexity and bitrate overhead associated with the transform stage, leading to improved compression efficiency, especially in scenarios with low residual energy or when the residual signal is already well-predicted by the motion compensation process. However, it's worth noting that the decision to apply TS mode is usually adaptive and depends on the characteristics of the block and the coding context determined by the encoder.

*Distortion metrics*

Non-transform based metrics (e.g., SAD, SSE, etc.)

The Sum of Absolute Differences (SAD) and Sum of Squared Errors (SSE) are common distortion metrics used in video coding. SAD calculates the sum of the absolute differences between corresponding pixel values in two blocks being compared, providing a measure of the overall discrepancy between them, expressed mathematically as:

$$SAD = \sum_{i=0}^{W-1} \sum_{j=0}^{H-1} |p_{ij} - t_{ij}|$$

$$SSE = \sum_{i=0}^{W-1} \sum_{j=0}^{H-1} (p_{ij} - t_{ij})^2$$

where:

$p_{ij}$   represents the pixel value at position (i, j) in the original block,
$t_{ij}$   represents the pixel value at position (i, j) in the distorted block after it is transformed to the DCT/Hadamard transform,
W, H   represent the width and the height of the block

Transform-based metrics (e.g., SATD, Hadamard-based)

Both Sum of Absolute Transform Differences (SATD) and Hadamard-based distortions are metrics commonly used in video compression to measure a distortion between two blocks of pixels (i.e., an original block and a distorted block) in the transform domain. They use DCT and Hadamard transforms, respectively, and are calculated as:

$$SATD = \sum_{i=0}^{W-1} \sum_{j=0}^{H-1} |Tr(p_{ij}) - Tr(t_{ij})|$$

where:

Tr   is the transformation function that takes pixel values from the pixel domain to a target transform domain (e.g. DCT, Hadamard)

Both metrics are typically slower than non-transform based metrics (e.g. SAD), due to their increased complexity. However, their benefit is that they more accurately model the number of bits required to transmit the residual error signal. As such, it is often used in video compressors, e.g., as a way to drive and estimate rate explicitly.

*Tools with normative use of distortion metrics*

Template-based intra mode derivation (TIMD)

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The costs of the two selected modes are compared with a threshold, and the cost factor of 2 may be applied as follows:

$$costMode2 < 2*costMode1.$$

If this condition is true, the fusion is applied, otherwise the only model is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by Cross-Component Linear Model (CCLM) modes.

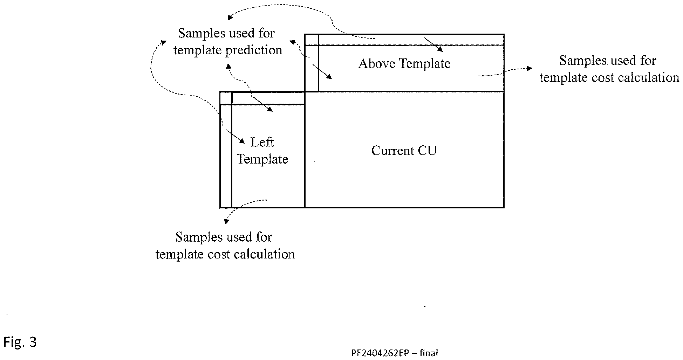

Besides, a location-dependent sample-based fusion used in a Decoder side intra mode derivation (DIMD) fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 3 illustrating the TIMD templates for the cost determination or calculation Intra block copy (IBC)

Intra block copy (IBC) is a tool adopted in HEVC extensions on SCC (Screen Content Coding Extension). IBC significantly improves the coding efficiency of screen content materials. Since the IBC mode is implemented as a block level coding mode, block matching (BM) is performed at the encoder to find the optimal block vector (or motion vector) for each CU. Here, a block vector is used to indicate the displacement from the current block to a reference block, which is already reconstructed inside the current picture. When combined with AMVR (Adaptive Motion. Vector Resolution), the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the encoder side, hash-based motion estimation is performed for IBC. The encoder performs RD (rate-distortion) check for blocks with either width or height no larger than 16 luma samples. For non-merge mode, the block vector search is performed using hash-based search first. If hash search does not return valid candidate, block matching based local search is performed.

In the hash-based search, hash key matching (32-bit CRC) between the current block and a reference block is extended to all allowed block sizes. The hash key calculation for every position in the current picture is based on 4x4 subblocks. For the current block of a larger size, a hash key is determined to match that of the reference block when all the hash keys of all 4×4 subblocks match the hash keys in the corresponding reference locations. If hash keys of multiple reference blocks are found to match that of the current block, the block vector costs of each matched reference are obtained and the one with the minimum cost is selected.

In block matching search, the search range is set to cover both the previous and current CTUs.

At CU level, IBC mode is signaled with a flag and it can be signaled as IBC AMVP (Advanced Motion Vector Prediction) mode or IBC skip/merge mode as follows:

- IBC skip/merge mode: a merge candidate index is used to indicate which of the block vectors in the list from neighboring candidate IBC coded blocks is used to predict the current block. The merge list consists of spatial, History based Motion Vector prediction (HMVP), and pairwise candidates.
- IBC AMVP mode: a block vector difference is coded in the same way as a motion vector difference. The block vector prediction method uses two candidates as predictors, one from left neighbor and one from above neighbor (if IBC coded). When either neighbor is not available, a default block vector is used as a predictor. A flag is signaled to indicate the block vector predictor index.

IBC reference region

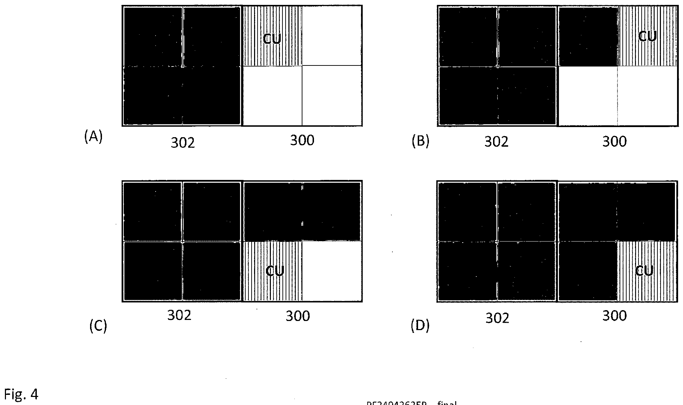

To reduce memory consumption and decoder complexity, the IBC in VVC allows only the reconstructed portion of the predefined area including the region of the current CTU and some region of the left CTU. Fig. 4(A) to Fig. 4(D) illustrate a current CTU processing order and its available reference samples in the current CTU 300 and a left CTU 302, more specifically, the reference regions of the IBC Mode, where each block represents 64x64 luma sample unit. Depending on the location of the current coding CU location within the current CTU 300, the following applies:

- If current block CU falls into the top-left 64x64 block of the current CTU 300 (see Fig. 4(A)), then in addition to the already reconstructed samples in the current CTU 300, it can also refer to the reference samples in the bottom-right 64x64 blocks of the left CTU 302, using CPR mode. The current block CU can also refer to the reference samples in the bottom-left 64x64 block of the left CTU 302 and the reference samples in the top-right 64x64 block of the left CTU (302), using CPR mode.
- If current block CU falls into the top-right 64x64 block of the current CTU 300 (see Fig. 4(B)), then in addition to the already reconstructed samples in the current CTU 300, if luma location (0, 64) relative to the current CTU (300) has not yet been reconstructed, the current block CU can also refer to the reference samples in the bottom-left 64x64 block and bottom-right 64x64 block of the left CTU 302, using CPR mode; otherwise, the current block CU can also refer to reference samples in bottom-right 64x64 block of the left CTU 302.

- If current block CU falls into the bottom-left 64x64 block of the current CTU 300 (see Fig. 4(C)), then in addition to the already reconstructed samples in the current CTU 300, if luma location (64, 0) relative to the current CTU 300 has not yet been reconstructed, the current block CU can also refer to the reference samples in the top-right 64x64 block and bottom-right 64x64 block of the left CTU 302, using CPR mode. Otherwise, the current block CU can also refer to the reference samples in the bottom-right 64x64 block of the left CTU 300, using CPR mode.

- If current block CU falls into the bottom-right 64x64 block of the current CTU 300 (see Fig. 4(D)), it can only refer to the already reconstructed samples in the current CTU 300, using CPR mode.

This restriction allows the IBC mode to be implemented using local on-chip memory for hardware implementations.

Intra template matching prediction (IntraTMP)

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

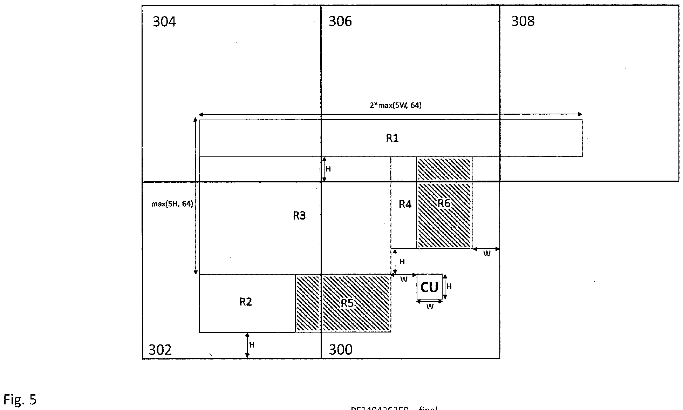

The prediction signal is generated by matching the L-shaped, Top-only or Left-Only causal neighbor of the current block with another block in a predefined search area illustrated in Fig. 5. There are 6 predefined search areas, i.e., R1 to R6 in Fig. 5 which contain the reconstructed samples from the top CTUs 304 to 308 and the left CTU 302 as well as part of the reconstructed samples within the current CTU 300 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas. The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate.

The sum of absolute differences (SAD) is used as a cost function.

A given search order of the 6 regions is utilized, e.g., R4, R5, R6, R1, R2, and R3. Within each region, the decoder constructs a candidate list of up to "19" template matching block vectors that are ranked in ascending order according to the template cost (SAD). The following modes are supported:

1- Single predictor: A single predictor is selected from the candidate list.
2- Fusion of multiple predictors: multiple predictors are blended multiple to derive the final prediction block. The blending weights are either computed from the template matching cost of each predictor, or with Wiener-filter based weight derivation method.
3- Sub-pel precision: When single predictor is used, sub-pel precision can be used with 1/2-pel precision, 1/4-pel precision and 3/4-pel precision, each with 8 possible directions.
4- Linear filter model: A linear filter can be learned between the reference template and current template and be applied the linear model to reference block. This mode can be used for single predictor when sub-pel precision is not used.

Additionally, IntraTMP with local illumination compensation is allowed. The following considerations are taken:

1- Usages of LIC and FLM (CCCM-like filtering) are mutually exclusive for a given CU.
2- Usages of LIC together with fusion in intra TMP is allowed.
3- Top-only and Left-only template usage for LIC model determination is allowed for screen content coding. For camera-captured coding, only the top-left template is employed.
4- Multi Mode Linear Model (MMLM) is supported similarly to IBC-LIC, for screen content coding.

When LIC is used for a given CU, the Intra TMP search process employs MRSAD rather than SAD distortion function.

The dimensions of all regions (SearchRange_w, SearchRange_h) are set proportional to the block dimension (BlkW, BlkH) to have a fixed number of SAD comparisons per pixel. That is:

$$SearchRange\_w = \min(64, a * BlkW)$$

$$SearchRange\_h = \min(64, a * BlkH)$$

where 'a' is a constant that controls the gain/complexity trade-off. In practice, 'a' may be equal to 5.

To speed-up the template matching process, the search range of all search regions is subsampled by a factor of 4. After finding the best match, a refinement process is performed. The refinement is done via a second template matching search around the best match with a reduced range.

The Intra template matching tool is enabled for CUs with a size less than or equal to 64 in width and height. This maximum CU size for Intra template matching is configurable.

The Intra template matching prediction mode is signaled at CU level through a dedicated flag when decoder-side intra mode derivation (DIMD) is not used for the current CU.

IntraTMP derived block vector candidates for IBC

In this method a block vector (BV) derived from the intra template matching prediction (IntraTMP) is used for the intra block copy (IBC). The stored IntraTMP BV of the neighboring blocks along with the IBC BV are used as spatial BV candidates in the IBC candidate list construction.

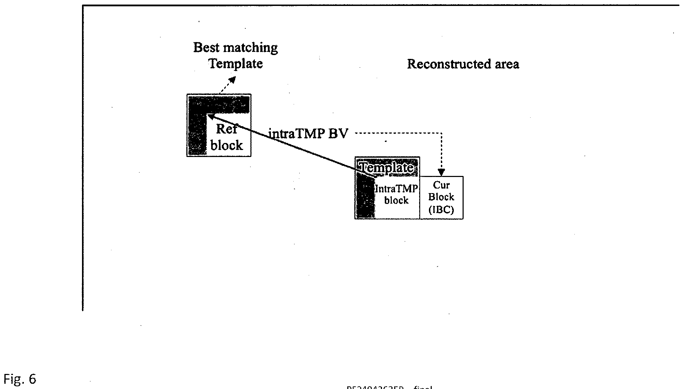

The IntraTMP block vector is stored in the IBC block vector buffer, and the current IBC block can use both IBC BV and IntraTMP BV of neighboring blocks as BV candidate for IBC BV candidate list as shown in Fig. 6 which illustrates the use of an IntraTMP block vector for an IBC block.

The IntraTMP block vectors are added to the IBC block vector candidate list as spatial candidates. The IntraTMP block vectors are stored in quarter-pel resolution for the coding of the IBC block vectors and the History based Motion Vector prediction (HMVP). Inter template-matching

In some inter coding tools, the Motion Vector (MV) coding can benefit from a template-based re-ordering. For instance, a merge mode can use template-matching to reorder the merge candidates in the merge list. Alternatively, an implicit GPM creates a list of pair of candidates from the regular GPM candidates which is re-ordered on the basis of the template cost.

As described above, conventionally, e.g., when using the current design of the Enhanced Compression Model (ECM), the process of choosing a cost metric (e.g. template cost) does not take into account whether the residual is transform-coded or not. In particular, when the residual is not transform-coded (e.g., when the Transform Skip tool is used), the cost metric during the prediction is nevertheless based on a transform-based distortion metric (e.g., SATD). This is disadvantageous because the template distortion calculation around a block is supposed to estimate the actual distortion on the inside part of the block. Now if the use of transform is not coherent between the two (i.e. one uses transform, while the other skips the transform), then the estimation would be inaccurate, impacting the coding efficiency.

Embodiments of the present disclosure addresses the above drawbacks by considering an interaction between two following elements: (1) a normative choice of a distortion metric that involves a transformation and (2) an absence of a transformation for the residual coding. Embodiments of the present disclosure propose to change the conventional interaction of these two elements, when considering them at the same time for a given or currently processed Coding Unit (CU) or for possibly CUs neighboring the currently processed CU.

In accordance with embodiments, one example of a residual coding method with an absence of the transformation step is the Transform Skip (TS), and one example of a distortion metric involving a transformation is the Sum of Absolute Transform Difference (SATD). In the rest of this disclosure, for the sake of simplicity, TS and SATD are used as examples. However, it is noted that the present disclosure is not limited to these examples. Rather, embodiments of the present disclosure may also be applied for other residual coding methods with an absence of the transformation step and other distortion metrics involving a transformation. An example of other residual coding methods with an absence of transformation step is Transquant Bypass, where both transformation and quantization are bypassed. Furthermore, an example of other distortion metrics using transform is using DCT as the transformation. This metric is called Sum of Transformed Squared Differences (STSD).

Since the distortion calculation is part of a normative process, all aspects of the present disclosure may be applied both at the encoder and decoder sides. The distortion calculation may take place either on the template of a given CU (e.g. TIMD), or on an internal content of a CU (e.g. BV refinement in IBC).

Embodiments provide various approaches for changing the conventional interaction of residual coding processes with an absence of the transformation step and distortion metrics involving a transformation.

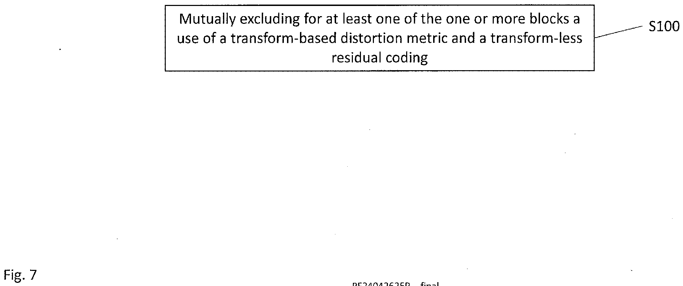

Fig. 7 illustrates a flow diagram of an embodiment of a method of processing one or more blocks of a picture. The method includes the following:

S100: Mutually excluding for at least one of the one or more blocks a use of a transform-based distortion metric and a transform-less residual coding.

Thus, according to embodiments, the mutual exclusion of the transform-based distortion metric and the transform-less residual coding is imposed for a given block or CU. In other words, their joint usage for a given CU is normatively disallowed. For example, if the use of the transform-less residual coding is already determined for a CU, then the use of the transform-based distortion metric is disallowed accordingly. In another example, when the use of the transform-based distortion metric is already determined for a CU, then the use of the transform-less residual coding is disallowed accordingly.

In the following, the transform-less residual coding, also referred to as a residual coding method with an absence of the transformation step, is the Transform Skip (TS), and the transform-based distortion metric, also referred to as a distortion metric involving a transformation, is the Sum of Absolute Transform Difference (SATD). The present disclosure is not limited to this, rather, in other embodiments other residual coding methods with an absence of the transformation step and other distortion metrics involving a transformation may be used.

In accordance with embodiments, TS and SATD are mutually excluded. Stated differently, the use of a normative transform-based distortion metric and a transform-less residual coding techniques is mutually excluded for a given CU, also referred to as a block or a currently processed block of the picture.

In accordance with embodiments, SATD is not used, when TS is already used. In other words, the use of a transform-based distortion metric (e.g. SATD) is disallowed, when the prediction residual is not transform-coded. For example, the use of the SATD for the template cost calculation (e.g. by TIMD) is disallowed, if TS is used for residual coding.

In accordance with other embodiments, TS is not used , when SATD is used. In other words, embodiments of the present disclosure do not use any transform-less residual coding, when a transform-based distortion metric is used.

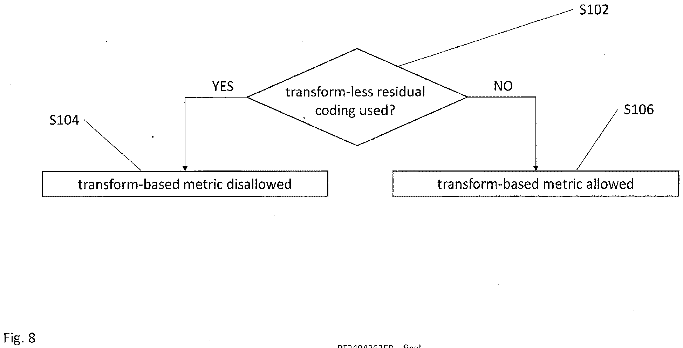

Fig. 8 illustrates a flow diagram of an embodiment of a method of processing one or more blocks of a picture. At S102 it is determined whether transform-less residual coding is used or not for the at least one block, or whether a prediction residual of the at least one block is transform-coded or not. If yes, i.e., when the transform-less residual coding is used or the prediction residual is transform-coded, the use of the transform-based distortion metric is disallowed S104. If no, i.e., when the transform-less residual coding is not used or the prediction residual is not transform-coded, the use of the transform-based distortion metric is allowed S106.

Regardless of how the inventive mutual exclusion of TS and SATD is implemented, in accordance with embodiments, the above described method may be applied either implicitly, e.g., without a modification in a signaling, or explicitly, e.g., with a modification in a signaling.

In accordance with embodiments, the mutual exclusion of the transform-based distortion metric, like TS, and the transform-less residual coding, like SATD, is signaled or determined implicitly, e.g., neither one of the transform-based distortion metric and the transform-less residual coding is signaled explicitly in a data stream, and a decoder determines the mutual exclusion implicitly. The data stream may be a bitstream including data representing the picture, e.g., at a Sequence Parameter Set, SPS, level or at a Picture Parameter Set, PPS, level.

In accordance with other embodiments, the mutual exclusion of the transform-based distortion metric, like TS, and the transform-less residual coding, like SATD, is signaled explicitly, e.g., the mutual exclusion may be transmitted by an encoder and received at a decoder. For example, the use of at least one of the transform-based distortion metric and the transform-less residual coding is signaled explicitly in the data stream.

Implicit Signaling

In an embodiment of this disclosure, imposing the mutual exclusion of the transform-based distortion metric and the transform-less residual coding is carried out implicitly, e.g., without a change in signaling. Stated differently, the mutual exclusion may be determined implicitly, e.g., by a decoder.

In one embodiment, at least one of the two elements of transform-based distortion metric and transform-less residual coding are used without signaling. In this case, the implicit derivation of the implicit element(s) is modified such that the mutual exclusion is imposed.

In another embodiment, the implicit use of a transform-based distortion metric is disallowed, if the transform-less residual coding has already been selected through explicit signaling.

In accordance with embodiments, at least one of the TS and the SATD does not use a signaling. For example, in accordance with an embodiment, it is determined implicitly whether the transform-less residual coding is used. For example, in VVC, when the intra coding mode of the CU is Block Differential Pulse-Code Modulation (BDPCM), the use of TS is determined implicitly, i.e., when knowing that BDPCM is used also the use of TS is known without the need for an explicit signaling. The transform-based distortion metric is not used, when it is determined that the transform-less residual coding is used, and the transform-based distortion metric is used, when it is determined that the transform-less residual coding is not used.

In accordance with other embodiments, it is determined implicitly whether the transform-based distortion metric is used. For example, currently in ECM, many tools use template cost for their algorithm. Some of them use SAD and some other use SATD, and their choice is implicit. For example MPM reordering with template cost uses SAD, while TIMD uses SATD. Thus, when using MPM reordering, it is known that SAD is used, without the need for an explicit signaling of the SAD. Likewise, when using TIMD, it is known that SATD is used, without the need for an explicit signaling of the SATD. The transform-less residual coding is not used, when it is determined that the transform-based distortion metric is used, and the transform-less residual coding is used, when it is determined that the transform-based distortion metric is not used.

In accordance with other embodiments, the use of both TS and SATD is determined without any signaling. For example, the use of TS may be implicitly determined, and, if TS is selected, it is implicitly determined to not use SATD. In other embodiments, the use of SATD may be implicitly determined, and, if SATD is selected, it is implicitly determined to not use TS. In other words, the inventive approach changes the implicit SATD usage conditions when TS is selected implicitly by making the use of SATD dependent on the use of TS/SATD, and/or the implicit TS usage conditions when SATD is selected implicitly by making the use of TS dependent on the use of SATD.

Explicit Signaling

In an embodiment of this disclosure, imposing the mutual exclusion of the transform-based distortion metric and the transform-less residual coding is carried out explicitly, e.g., with a change in signaling. In other words, the mutual exclusion may be signaled, e.g., may be transmitted by an encoder and received at a decoder. In accordance with embodiments, the signaling may use one or more signals, e.g., one or more bits or one or more flags, for indicating one or more of the following:

- The mutual exclusion of the transform-based distortion metric and the transform-less residual coding, e.g., by signaling a flag, like the *"sps_ts_satd_exlusion_enabled_flag"*, indicating that a process, e.g. a decoding process at a decoder, is not to use a transform-based distortion metric and a transform-less residual coding on the same block.
- The use of the transform-based distortion metric and the non-use of the transform-less residual coding, e.g., by signaling a SATD flag having a first value, like "1" or "true" and a TS flag having a second value, like "0" or "false", or by signaling a two bit value. For example, a fist bit of the two bit value may be associated with the use/non-use of the transform-based distortion metric, and a second bit of the two bit value may be associated with the use/non-use of the transform-less residual coding, and the value 10 may be signaled for indicating the use (1) of the transform-based distortion metric and the non-use (0) of the transform-less residual coding.
- the non-use of the transform-based distortion metric and the use of the transform-less residual coding, e.g., by signaling the SATD flag having a second value, like "0" or "false" and the TS flag having the first value, like "1" or "true", or by signaling a two bit value 01 for indicating the non-use (0) of the transform-based distortion metric and the use (1) of the transform-less residual coding.
- The use of the transform-based distortion metric, wherein the non-use of the transform-less residual coding is determined implicitly, e.g., by signaling only the SATD flag having a first value or by signaling explicitly a certain transform-based distortion metric to be used.
- The non-use of the transform-based distortion metric, wherein the use of the transform-less residual coding is determined implicitly, e.g., by signaling only the SATD flag having the second value or by signaling explicitly a certain non-transform-based distortion metric to be used.
- The use of the transform-less residual coding, wherein the non-use of the transform-based distortion metric is determined implicitly, e.g., by signaling only the TS flag having the first value or by signaling explicitly a certain transform-less residual coding to be used.
- The non-use of the transform-less residual coding, wherein the use of the transform-based distortion metric is determined implicitly, e.g., by signaling only the TS flag having the second value or by signaling explicitly a certain non-transform-less residual coding to be used.

In other examples an encoder may transmit a signal A, like a two bit signal, having one of the following values:

- A=00: Transform-based distortion metric and the transform-less residual coding are excluded, and a transform-based distortion metric is to be used. The non-use of the transform-less residual coding may be determined implicitly.
- A=01: Transform-based distortion metric and the transform-less residual coding are excluded, and a transform-less residual coding is to be used. The non-use of the transform-based distortion metric may be determined implicitly.
- A=10: A transform-less residual coding is to be used. The non-use of the transform-based distortion metric may be determined implicitly.
- A=11: A transform-based distortion metric is to be used. The non-use of the transform-less residual coding may be determined implicitly.

In accordance with embodiments, both the use of TS and the use of SATD are explicitly signaled in the bitstream, however, according to the inventive approach, a conventional interaction is changed or modified such that TS and SATD are not used at the same time for a given or currently processed CU.

In accordance with embodiments, the use of at least one of the transform-based distortion metric, like SATD, and the transform-less residual coding, like TS, is signaled explicitly in a data stream, like a bitstream, including data representing the picture, e.g., at a Sequence Parameter Set, SPS, level or at a Picture Parameter Set, PPS, level. For example, the use of the transform-based distortion metric may be signaled for the at least one block explicitly using a first flag, and/or the use of the transform-less residual coding may be signaled for the at least one block explicitly using a second flag. The first flag has a first value or a second value. The first value, like "true" or "1", indicates that the transform-based distortion metric is used and the second value, like "false" or "0", indicates that the transform-based distortion metric is not used. The second flag has a first value or a second value. The first value, like "true" or "1", indicates that the transform-less residual coding is used and the second value, like "false" or "0", indicates that the transform-less residual coding is not used.

In accordance with an embodiment, one of the first flag and the second flag is signaled for the at least one block in the data stream. For example, the first flag is a SATD flag and may be signaled explicitly in the bitstream, while the choice of the residual coding is determined without any signaling, i.e., no second flag is signaled. In this case, it is determined implicitly not to use the TS for the residual coding. In other words, the choice or use of the TS is not normatively signaled in the bitstream and its use is determined implicitly and based on the available information at the decoder side. Thus, according to embodiments, the implicit TS usage conditions are changed and are made dependent to the use of SATD. In accordance with another example, the second flag is a TS flag that may be signaled explicitly in the bitstream, while the choice of the cost metric is determined without any signaling, i.e., no first flag is signaled. In this case, it is determined implicitly not to use the SATD for a template cost calculation. In other words, the choice or use of the SATD is not normatively signaled in the bitstream and its use is determined implicitly and based on the available information at the decoder side. Thus, according to embodiments, the implicit SATD usage conditions are changed and are made dependent to the use of TS.

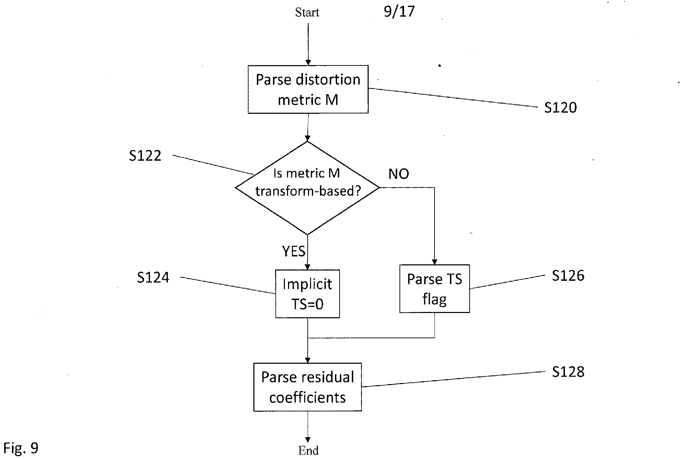

In one embodiment, the signaling of the transform-based distortion metric takes place before the signaling of the transform-less residual coding method. In this case, the signaling of the transform-less residual method is avoided, if the distortion metric is already signaled to be transform-based. Fig. 9 illustrates a flow diagram of an embodiment for parsing a TS flag dependent on a choice of a distortion metric. The data stream is parsed S120 for the distortion metric M, e.g., the data stream may be parsed for the SATD flag. At S122 it is determined whether or not the distortion metric is transform-based. For example, it is determined whether the SATD flag has the first value or the second value. When the distortion metric is transform-based (S122 yields "YES"), e.g., when the SATD flag has the first value, the data stream is not parsed for the TS flag and the TS flag is set S124 to the second value. When the distortion metric is not transform-based (S122 yields "NO"), e.g., when the SATD flag has the second value, the data stream is parsed S126 for the TS flag. Optionally, after setting S124 or obtaining S126 the TS flag, residual coefficients may be parsed S128 from the bitstream. Thus, when the explicit signaling of the template cost metric takes place before the TS flag signaling, the signaling of TS is avoided, if the distortion metric is already signaled to be SATD. Instead, the TS flag is implicitly derived to be false or 0.

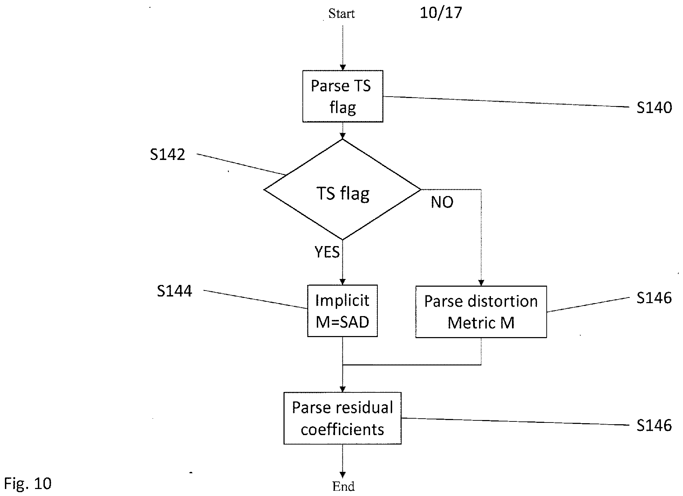

In another embodiment, the signaling of the transform-based distortion metric takes place after the signaling of the transform-less residual coding method. In this case, if the use of a transform-less residual coding is already signaled, then depending on the number of available cost metrics, the signaling of the cost metric is avoided or modified in order to impose their mutual exclusion. For example, when considering two CABAC contexts for signaling the CU-level flag, then, based on the CU width and height, a threshold to use the first context for small CUs and the second context for large CUs may be applied. Fig. 10 illustrates a flow diagram of an embodiment for parsing a distortion metric, like a SATD flag, dependent on a choice of a residual coding. The data stream is parsed S140 for the TS flag. At S142 it is determined whether or not the residual coding is transform-based. For example, it is determined whether the TS flag has the first value or the second value. When the residual coding is transform-less (S142 yields "YES"), e.g., when the TS flag has the first value, the data stream is not parsed for distortion metric M, and the distortion metric M is implicitly set S144 to indicate one or more non-transform-based distortion metrics, e.g., the distortion metric M may be set to SAD. When the residual coding is not transform-less (S142 yields "NO"), e.g., when the TS flag has the second value, the data stream is parsed S146 for the distortion metric M. Optionally, after setting S144 or obtaining S146 the distortion metric M, residual coefficients may be parsed S148 from the bitstream. Thus, when the explicit signaling of the template cost metric takes place after the TS flag signaling, if the use of TS is already signaled, then depending on the number of available cost metrics, the signaling of the cost metric is avoided or modified. This modification guarantees that the template cost metric signaling excludes the use of SATD such that SATD is not be among possible outcome for the current CU.

Template-based re-ordering of IBC, IntraTmp and Inter Template-matching

In accordance with embodiments of this disclosure, the mutual exclusion of the transform-less residual coding and transform-based distortion metric is imposed during a Block Vector (BV) or Motion Vector (MV) refinement. In an embodiment, if the current CU needs to refine its BV by using template matching algorithms, a refinement by transform-based distortion metric is not allowed when a transform-less residual coding is used for the current CU.

In an embodiment, the BV MV refinement is applied on

- Intra Block Copy (IBC) blocks, where an explicit BV or MV is signaled for the current CU or
- IntraTmp blocks, where the initial BV or MV is derived implicitly.

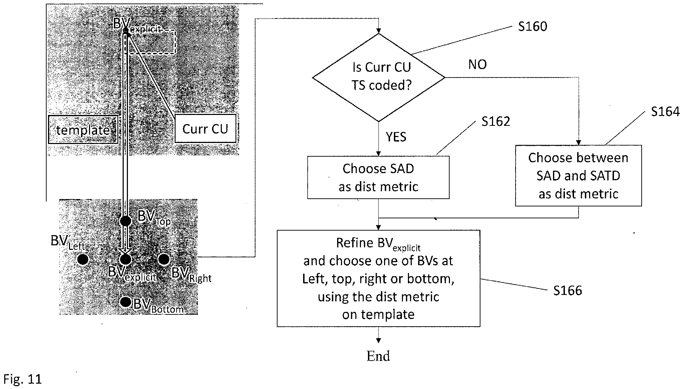

Conventionally, in some coding tools, such as IBC, IntraTmp and inter template-matching tools, a list of BV (or MV) candidates is prepared for each CU and then the BVs (or MVs) in the list are re-ordered based on their template cost. According to embodiments of this disclosure, in cases when TS is used for residual coding of a current CU, the reordering is not implemented using SATD or any other transform-based distortion metric. Fig. 11 illustrates a template-based re-ordering of IBC BV candidates in accordance with an embodiment to refine its explicit BV. Fig. 11 demonstrates how the inventive approach may be implemented for IBC blocks, where an initial BV is explicitly signaled for current CU.

Fig. 11 illustrates the currently processed block or CU, Curr Cu, and the template area. Four candidates $BV_{Top}$, $BV_{Left}$, $BV_{Right}$ and $BV_{Bottom}$ at the top, the left, the right and the bottom of the explicit BV, $BV_{explicit}$, are considered for the refinement. The refinement process takes into account whether the TS mode is used for current CU. At S160 it is determined whether or not the TS mode is used for current CU. If so (yes), it uses S162 SAD as the distortion metric, otherwise (no) the block can freely choose (S164) between SAD and SATD. The distortion metric is then be applied S166 on the template to determine which refinement candidate is the best.

Modified CABAC context selection

In accordance with embodiments of this disclosure, when the transform-based distortion metric and transform-less residual coding are signaled explicitly, the choice of a CABAC context for signaling each of them depends on the value of the other one.

In the above-described embodiment, where the explicit signaling of transform-based distortion metric takes place before the signaling of the transform-less residual-coding, the CABAC context selection of the transform-less residual coding may depend on the choice of transform-based distortion metric. For example, when having two CABAC contexts for the transform-less residual coding (ctx-1 and ctx-2), when SAD is selected [explicitly], ctx-1 is chosen and, when SATD is selected, ctx-2 is chosen.

In the above-described embodiment, where the explicit signaling of transform-based distortion metric takes place after the signaling of the transform-less residual-coding, the CABAC context selection of the transform-based distortion metric will depend on the choice of the transform-less residual coding. For example, when having two CABAC contexts for the explicit signaling of the distortion metric (ctx-1 and ctx-2), when transform-based residual coding is used, ctx-1 is chosen, otherwise (transform-less residual coding), ctx-2 is chosen.

In other words, the interaction between TS and SATD is taken into account for the CABAC context selection process of transform coefficient coding (including TS coefficients). More specifically, in case of explicit usage of SATD (or any other transform-based distortion metric) for a CU, a different set of CABAC contexts is used for parsing the residual coefficients of that CU. These residual coefficients may be either transform-coded or transform-skipped.

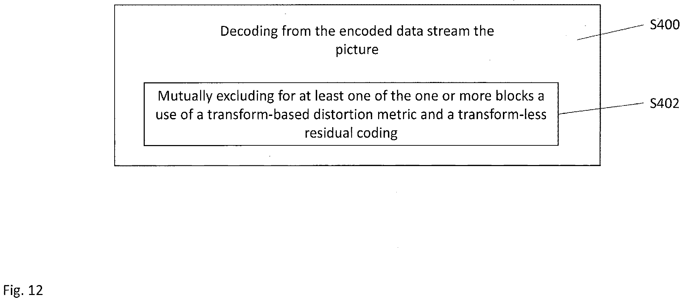

Fig. 12 illustrates a flow diagram of a method for decoding an encoded data stream, the encoded data stream including data representing a picture, in accordance with an embodiment. The method includes the following:
S400: Decoding from the encoded data stream the picture.
Decoding the picture comprises processing one or more blocks of the picture. The processing includes mutually excluding S402 for at least one of the one or more blocks a use of a transform-based distortion metric and a transform-less residual coding. Optionally, the method comprises parsing from a data stream or bitstream one or more flags or information, e.g., the one or more flags or the information as described above with reference to Fig. 9 or Fig. 10.

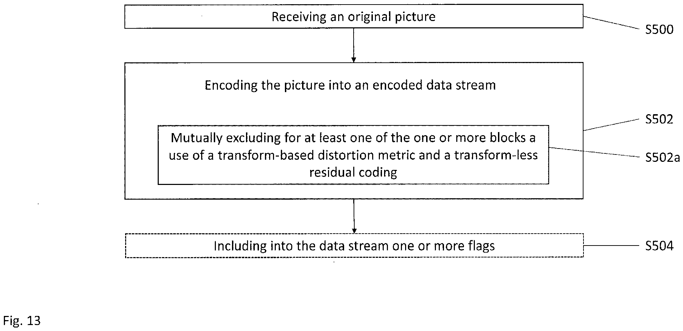

Fig. 13 illustrates a flow diagram of a method for encoding a picture into an encoded data stream, in accordance with a first embodiment. The encoded data stream includes data representing the picture and the method includes the following:

S500: Receiving an original picture.
S502: Encoding the picture into the encoded data stream.

Encoding the picture comprises processing one or more blocks of the picture. The processing includes mutually excluding 502a for at least one of the one or more blocks a use of a transform-based distortion metric and a transform-less residual coding. Optionally, the method comprises including S504 into a data stream or bitstream one or more flags or information, e.g., the one or more flags or the information as described above with reference to Fig. 9 or Fig. 10.

Further embodiments

So far, the inventive concept has been described with reference to aspects and embodiments concerning methods of processing one or more blocks of the picture, e.g., for decoding and for encoding. In accordance with further embodiments, the present disclosure also provides an apparatus of processing one or more blocks of the picture as well as encoders/decoders including such an apparatus.

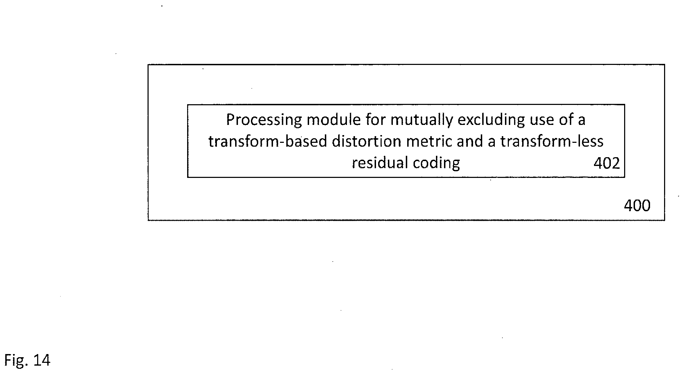

Fig. 14 illustrates a block diagram of an apparatus of processing one or more blocks of a picture in accordance with an embodiment of the present disclosure. The apparatus 400 includes the following modules:

402: A processing module for mutually excluding use of a transform-based distortion metric and a transform-less residual coding.

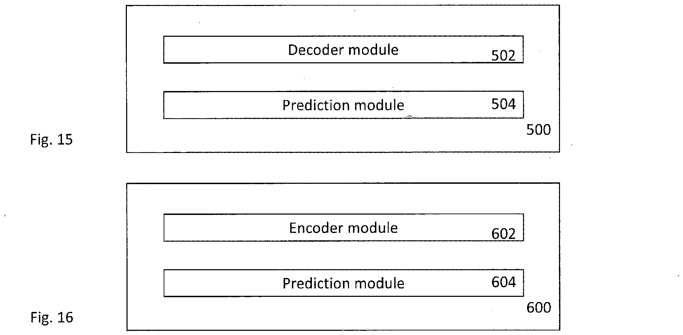

Fig. 15 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A prediction module, e.g., a prediction module 170 as depicted in Fig. 2.

The decoder 500 is configured to operate in accordance with embodiments of the present disclosure. For example, the decoder 500 includes an apparatus as described with reference to Fig. 14.

Fig. 16 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A prediction module, e.g., a prediction module 124 as depicted in Fig. 1.

The prediction module 604 is configured to operate in accordance with embodiments of the present disclosure. For example, the encoder 600 includes an apparatus as described with reference to Fig. 14.

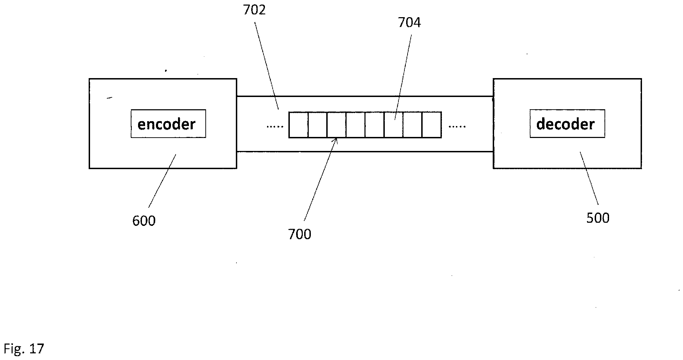

Fig. 17 illustrates a data stream 700 in accordance with embodiments of the present disclosure, which has encoded thereinto a picture and information data associated with the picture. In general, the data stream may have encoded thereinto information representing a picture and/or information being associated with encoding/decoding the picture. For example, the data stream or bitstream 700 may be provided by an encoder 600 that performs the inventive method for encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating a mutually exclusion of the use of the transform-based distortion metric and the transform-less residual coding in accordance with the present disclosure. An exemplary syntax is shown below including the flag *"sps_ts_satd_exlusion_enabled_flag"* indicating the mutually exclusion of the use of the transform-based distortion metric and the transform-less residual coding.

|  | Descriptor |
|---|---|
| ... |  |
| sps_isp_enabled_flag | u(1) |
| sps_mrl_enabled_flag | u(1) |
| sps_mip_enabled_flag | u(1) |
| sps_ts_satd_exlusion_enabled_flag | u(1) |
| ... |  |
|  |  |

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

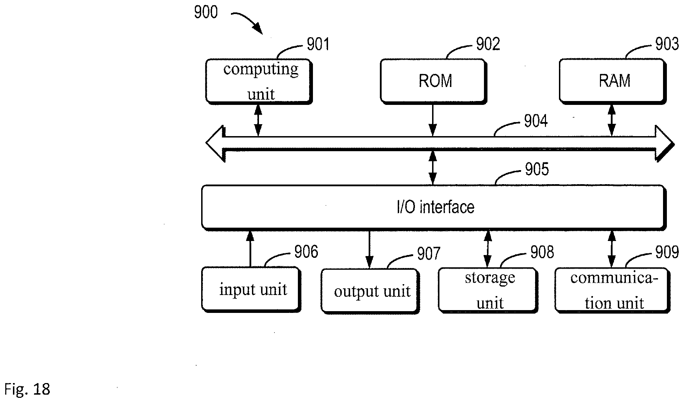

Fig. 18 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising: mutually excluding for at least one of the one or more blocks a use of a transform-based distortion metric and a transform-less residual coding.

A 2nd embodiment provides the method of the 1st embodiment, wherein

- the use of the transform-based distortion metric is disallowed when the transform-less residual coding is used for the at least one block, or
- the use of the transform-less residual coding is disallowed when the transform-based distortion metric is used for the at least one block.

A 3rd embodiment provides the method of the 1st embodiment, wherein

- the use of the transform-based distortion metric is allowed when a prediction residual of the at least one block is not transform-coded, or
- the use of the transform-based distortion metric is disallowed when a prediction residual of the at least one block is transform-coded.

A 4th embodiment provides the method of any one of the preceding embodiments, wherein the mutual exclusion of the transform-based distortion metric and the transform-less residual coding is

- determined implicitly, e.g., by a decoder, and/or
- signaled, e.g., transmitted by an encoder and received at a decoder.

A 5th embodiment provides the method of the 4th embodiment, wherein neither one of the transform-based distortion metric and the transform-less residual coding is signaled explicitly in a data stream, like a bitstream, including data representing the picture, e.g., at a Sequence Parameter Set, SPS, level or at a Picture Parameter Set, PPS, level

A 6th embodiment provides the method of the 4th or 5th embodiment, wherein

it is determined implicitly whether the transform-less residual coding is used,
the transform-based distortion metric is not used, when it is determined that the transform-less residual coding is used, and
the transform-based distortion metric is used, when it is determined that the transform-less residual coding is not used.

A 7th embodiment provides the method of the 4th or 5th embodiment, wherein

it is determined implicitly whether the transform-based distortion metric is used, the transform-less residual coding is not used, when it is determined that the transform-based distortion metric is used, and the transform-less residual coding is used, when it is determined that the transform-based distortion metric is not used.

An 8th embodiment provides the method of any one the 4th to 7th embodiments, wherein the signaling uses one or more signals, e.g., one or more bits or one or more flags, for indicating one or more of the following:

- the mutual exclusion of the transform-based distortion metric and the transform-less residual coding,
- the use of the transform-based distortion metric and the non-use of the transform-less residual coding,
- the non-use of the transform-based distortion metric and the use of the transform-less residual coding,
- the use of the transform-based distortion metric, wherein the non-use of the transform-less residual coding is determined implicitly,
- the non-use of the transform-based distortion metric, wherein the use of the transform-less residual coding is determined implicitly,
- the use of the transform-less residual coding, wherein the non-use of the transform-based distortion metric is determined implicitly,
- the non-use of the transform-less residual coding, wherein the use of the transform-based distortion metric is determined implicitly

A 9th embodiment provides the method of the 8th embodiment, wherein the use of at least one of the transform-based distortion metric and the transform-less residual coding is signaled explicitly in a data stream, like a bitstream, including data representing the picture, e.g., at a Sequence Parameter Set, SPS, level or at a Picture Parameter Set, PPS, level.

A 10th embodiment provides the method of the 8th or 9th embodiment, wherein

the use of the transform-based distortion metric is signaled for the at least one block explicitly in the data stream using a first flag, and/or the use of the transform-less residual coding is signaled for the at least one block explicitly in the data stream using a second flag,
the first flag has a first value or a second value, wherein the first value indicates that the transform-less residual coding is used and the second value indicates that the transform-less residual coding is not used, and
the second flag has a first value or a second value, wherein the first value indicates that the transform-based distortion metric is used and the second value indicates that the transform-based distortion metric is not used.

An 11th embodiment provides the method of the 10th embodiment, wherein one of the first flag and the second flag is signaled for the at least one block in the data stream.

A 12th embodiment provides the method of the 10th or 11th embodiment, wherein the first flag is signaled, wherein (a) the transform-less residual coding is not used when to the first flag has the first value, and (b) the transform-less residual coding is used when to the first flag has the second value.

A 13th embodiment provides the method of the 10th or 11th embodiment, wherein, among the first and second flags, the first flag or a certain distortion metric is signaled first for the at least one block, and, when the first flag has the first value or the certain distortion metric is a transform-based distortion metric, the second flag is not signaled in the data stream and is implicitly derived to have the second value.

A 14th embodiment provides the method of the 13th embodiment, wherein

the first flag or the certain distortion metric is parsed from the data stream,
the first flag is determined to have the first value or the second value, or the certain distortion metric is determined to be a transform-based distortion metric or a non-transform-based distortion metric,
the data stream is not parsed for the second flag and the second flag is set to the second value, when the first flag has the first value or the certain distortion metric is a transform-based distortion metric, and
the data stream is parsed for the second flag, when the first flag has the second value or the certain distortion metric is a non-transform-based distortion metric.

A 15th embodiment provides the method of the 10th or 11th embodiment, wherein the second flag is signaled, wherein

(a) the transform-based distortion metric is not used when to the second flag has the first value, and
(b) the transform-based distortion metric is used when to the second flag has the second value.

A 16th embodiment provides the method of the 10th or 11th embodiment, wherein, among the first and second flags, the second flag is signaled first for the at least one block, and, when the second flag has the first value,

- the first flag is not signaled in the data stream and a value of the first flag is implicitly derived to have the second value, or
- a predefined non-transform-based distortion metric is used.

A 17th embodiment provides the method of the 14th embodiment, wherein

the second flag is parsed from the data stream,
the second flag is determined to have the first value or the second value,
the data stream is not parsed for the first flag or for a distortion metric and the first flag is set to the second value or a predefined non-transform-based distortion metric is selected, when the second flag has the first value, and
the data stream is parsed for the first flag or for the distortion metric, when the second flag has the second value.

An 18th embodiment provides the method of the 14th or 17th embodiment, wherein one or more residual coefficients are parsed from the data stream.

A 19th embodiment provides the method of the 10th or 11th embodiment, wherein, among the first and second flags, the first flag is signaled first for the at least one block, and, when the first flag has the first value, a signaling of the second flag is modified so as to indicate one or more non-transform-less residual codings to be used.

A 20th embodiment provides the method of the 10th or 11th embodiment, wherein, among the first and second flags, the second flag is signaled first for the at least one block, and, when the second flag has the first value, a signaling of the first flag is modified so as to indicate one or more non-transform-based distortion metrics to be used.

A 21st embodiment provides the method of the 4th or 20th embodiment, wherein, when the transform-based distortion metric and the transform-less residual coding are signaled explicitly, a choice of a context adaptive binary arithmetic coding, CABAC, context for signaling of each of the transform-based distortion metric and the transform-less residual coding depends on a value of the other one.

A 22nd embodiment provides the method of the 21st embodiment, wherein, when the explicit signaling of the transform-based distortion metric takes place before the signaling of the transform-less residual-coding, the CABAC context selection of the transform-less residual coding depends on a choice of transform-based distortion metric.

A 23rd embodiment provides the method of the 21st embodiment, wherein, when the explicit signaling of the transform-based distortion metric takes place after the signaling of the transform-less residual-coding, the CABAC context selection of the transform-based distortion metric depends on a choice of the transform-less residual coding.

A 24th embodiment provides the method of any one of the preceding embodiments, wherein mutually excluding the use of the transform-based distortion metric and the transform-less residual coding is applied during a block vector, BV, or motion vector, MV, refinement process.

A 25th embodiment provides the method of the 24th embodiment, wherein the BV or MV refinement process comprises:
re-ordering, for the at least one block, a list of BV or MV candidates, wherein, when the transform-less residual coding is used for the at least one block, no transform-based distortion metric is used for implementing the re-ordering.

A 26th embodiment provides the method of the 24th or 25th embodiment, wherein the reordering is a template-based re-ordering of the list of BV or MV candidates of a certain coding tool block, wherein, when the transform-less residual coding is used for the at least one block, no transform-based distortion metric is used for determining template costs used for the re-ordering of the list.

A 27th embodiment provides the method of the 25th or 26th embodiment, wherein

- an initial BV or MV is explicitly signaled for the at least one block,
- a no transform-based distortion metric is selected for determining a distortion metric for one or more neighboring BV or MV candidates, when the transform-less residual coding is used,
- a transform-based distortion metric and/or a no transform-based distortion metric is selected for determining a distortion metric for the one or more BV or MV candidates, when the transform-less residual coding is not used,
- one of the BV or MV candidates is selected, using the distortion metric, for a refinement the initial BV or MV.

A 28th embodiment provides the method of any one the 27th embodiment, wherein the BV or MV candidate, which has the best distortion metric, is selected for the refinement.

A 29th embodiment provides the method of any one the 24th to 28th embodiments, wherein the one or more BV or MV candidates comprise four candidates, which are located at the top, the left, the right and the bottom of the explicit BV or MV.

A 30th embodiment provides the method of any one of the 24th to 29th embodiments, wherein the certain coding tool block comprises one or more of the following:

- an intra template matching prediction, IntraTMP, block,
- an intra block copy, IBC, block,
- inter-template-matching block.

A 31st embodiment provides a method for decoding a data stream, the data stream including data representing a picture, the method comprising:

decoding from the data stream the picture,
wherein decoding the picture comprises processing one or more blocks according to any one of the preceding embodiments.

A 32nd embodiment provides the method of the 31st embodiment, wherein decoding the picture comprises obtaining from the data stream a signaling indicating the mutually exclusion of the use of the transform-based distortion metric and the transform-less residual coding.

A 33rd embodiment provides a method for encoding a picture into a data stream, the data stream including data representing the picture, the method comprising:

receiving an original picture, and
encoding the picture into the data stream,
wherein encoding the picture comprises processing one or more blocks according to any one of the 1st to 32nd embodiments.

A 34th embodiment provides the method of the 33rd embodiment, wherein encoding the picture comprises encoding into the data stream a signaling indicating the mutually exclusion of the use of the transform-based distortion metric and the transform-less residual coding.

A 35th embodiment provides a non-transitory computer-readable storage medium comprising instructions which, when executed by a computer, cause the computer to carry out the method of any one of the preceding embodiments.

A 36th embodiment provides an apparatus of processing one or more blocks of a picture, the apparatus comprising: a processing module configured to mutually exclude for at least one of the one or more blocks a use of a transform-based distortion metric and a transform-less residual coding.

A 37th embodiment provides an apparatus for decoding a data stream, the data stream including data representing a picture, the apparatus comprising:

a decoder module configured to decode from the data stream the picture, and
an apparatus according to the 36th embodiment.

A 38th embodiment provides an apparatus for encoding a picture into a data stream, the data stream including data representing the picture, the apparatus comprising:

an encoder module configured to receive the original picture and to encode the picture into the data stream, and an apparatus according to the 36th embodiment.

A 39th embodiment provides a data stream having encoded thereinto a picture, wherein the data stream comprises: a signaling indicating a mutually exclusion of the use of the transform-based distortion metric and the transform-less residual coding.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audio-visual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-2018-I/en
[4] AV1 Bitstream & Decoding Process Specification, http://aomedia.org/av1/specification/
[5] Algorithm description of Enhanced Compression Model 12 (ECM 12), document JVET-AG2025, https://jvet-experts.org/doc_end_user/documents/33_Teleconference/wg11/JVET-AG2025-v1.zip

**Claims**

1. A method of processing one or more blocks of a picture, the method comprising:
mutually excluding for at least one of the one or more blocks a use of a transform-based distortion metric and a transform-less residual coding.

2. The method of claim 1, wherein

- the use of the transform-based distortion metric is disallowed when the transform-less residual coding is used for the at least one block, or
- the use of the transform-less residual coding is disallowed when the transform-based distortion metric is used for the at least one block.

3. The method of claim 1 or 2, wherein the mutual exclusion of the transform-based distortion metric and the transform-less residual coding is

- determined implicitly, e.g., by a decoder, and/or
- signaled, e.g., transmitted by an encoder and received at a decoder.

4. The method of claim 3, wherein

it is determined implicitly whether the transform-less residual coding is used,
the transform-based distortion metric is not used, when it is determined that the transform-less residual coding is used, and
the transform-based distortion metric is used, when it is determined that the transform-less residual coding is not used, or
it is determined implicitly whether the transform-based distortion metric is used, the transform-less residual coding is not used, when it is determined that the transform-based distortion metric is used, and
the transform-less residual coding is used, when it is determined that the transform-based distortion metric is not used.

5. The method of claim 3 or 4, wherein the signaling uses one or more signals, e.g., one or more bits or one or more flags, for indicating one or more of the following:

- the mutual exclusion of the transform-based distortion metric and the transform-less residual coding,
- the use of the transform-based distortion metric and the non-use of the transform-less residual coding,
- the non-use of the transform-based distortion metric and the use of the transform-less residual coding,
- the use of the transform-based distortion metric, wherein the non-use of the transform-less residual coding is determined implicitly,
- the non-use of the transform-based distortion metric, wherein the use of the transform-less residual coding is determined implicitly,
- the use of the transform-less residual coding, wherein the non-use of the transform-based distortion metric is determined implicitly,
- the non-use of the transform-less residual coding, wherein the use of the transform-based distortion metric is determined implicitly.

6. The method of claim 5, wherein

the use of the transform-based distortion metric is signaled for the at least one block explicitly in a data stream using a first flag, and/or the use of the transform-less residual coding is signaled for the at least one block explicitly in the data stream using a second flag,
the first flag has a first value or a second value, wherein the first value indicates that the transform-based distortion metric is used and the second value indicates that the transform-based distortion metric is not used, and
the second flag has a first value or a second value, wherein the first value indicates that the transform-less residual coding is used and the second value indicates that the transform-less residual coding is not used.

7. The method of claim 6, wherein

the first flag is signaled, wherein

(a) the transform-less residual coding is not used when to the first flag has the first value, and
(b) the transform-less residual coding is used when to the first flag has the second value, or

the second flag is signaled, wherein

(a) the transform-based distortion metric is not used when to the second flag has the first value, and
(b) the transform-based distortion metric is used when to the second flag has the second value.

8. The method of claim 6, wherein

among the first and second flags, the first flag or a certain distortion metric is signaled first for the at least one block, and, when the first flag has the first value or the certain distortion metric is a transform-based distortion metric, the second flag is not signaled in the data stream and is implicitly derived to have the second value, or
among the first and second flags, the second flag is signaled first for the at least one block, and, when the second flag has the first value,

- the first flag is not signaled in the data stream and a value of the first flag is implicitly derived to have the second value, or
- a predefined non-transform-based distortion metric is used.

9. The method of claim 6, wherein

among the first and second flags, the first flag is signaled first for the at least one block, and, when the first flag has the first value, a signaling of the second flag is modified so as to indicate one or more non-transform-less residual codings to be used, or
among the first and second flags, the second flag is signaled first for the at least one block, and, when the second flag has the first value, a signaling of the first flag is modified so as to indicate one or more non-transform-based distortion metrics to be used.

10. The method of any one of claims 3 to 9, wherein, when the transform-based distortion metric and the transform-less residual coding are signaled explicitly, a choice of a context adaptive binary arithmetic coding, CABAC, context for signaling of each of the transform-based distortion metric and the transform-less residual coding is such that

when the explicit signaling of the transform-based distortion metric takes place before the signaling of the transform-less residual-coding, the CABAC context selection of the transform-less residual coding depends on a choice of transform-based distortion metric, and
when the explicit signaling of the transform-based distortion metric takes place after the signaling of the transform-less residual-coding, the CABAC context selection of the transform-based distortion metric depends on a choice of the transform-less residual coding.

11. The method of any one of the preceding claims, wherein
mutually excluding the use of the transform-based distortion metric and the transform-less residual coding is applied during a block vector, BV, or motion vector, MV, refinement process.

12. The method of claim 11, wherein the BV or MV refinement process comprises:
re-ordering, for the at least one block, a list of BV or MV candidates, wherein, when the transform-less residual coding is used for the at least one block, no transform-based distortion metric is used for implementing the re-ordering.

13. A non-transitory computer-readable storage medium comprising instructions which, when executed by a computer, cause the computer to carry out the method of any one of the preceding claims.

14. An apparatus of processing one or more blocks of a picture, the apparatus comprising:
a processing module configured to mutually exclude for at least one of the one or more blocks a use of a transform-based distortion metric and a transform-less residual coding.

15. A data stream having encoded thereinto a picture, wherein the data stream comprises:
a signaling indicating a mutually exclusion of the use of the transform-based distortion metric and the transform-less residual coding.

Fig. 1

PF2404262EP – final

Fig. 2

PF2404262EP – final

Samples used for
template prediction

Above Template

Samples used for
template cost calculation

Left
Template

Current CU

Samples used for
template cost calculation

Fig. 3

PF2404262EP – final

(A)  302  300

(B)  302  300

(C)  302  300

(D)  302  300

Fig. 4

Fig. 5

Fig. 6

Mutually excluding for at least one of the one or more blocks a use of a transform-based distortion metric and a transform-less residual coding ⌐ S100

Fig. 7

PF2404262FP - final

S102

transform-less residual
coding used?

YES

NO

S104

S106

| transform-based metric disallowed | | transform-based metric allowed |

Fig. 8

Start

Parse distortion
metric M — S120

S122 — Is metric M
transform-based? — NO

YES

S124 — Implicit
TS=0

Parse TS
flag — S126

Parse residual
coefficients — S128

Fig. 9

End

Start

Parse TS
flag ————————————————— S140

S142 —— TS flag

NO

YES

S144 —— Implicit
M=SAD

Parse distortion
Metric M ——— S146

Parse residual
coefficients ————————————— S146

End

Fig. 10

Fig. 11

Decoding from the encoded data stream the picture — S400

Mutually excluding for at least one of the one or more blocks a use of a transform-based distortion metric and a transform-less residual coding — S402

Fig. 12

```
┌────────────────────────────────────────────────────┐
│            Receiving an original picture            │──────── S500
└────────────────────────────────────────────────────┘
                          │
                          ▼
┌────────────────────────────────────────────────────┐
│     Encoding the picture into an encoded data stream │
│                                                      │──── S502
│  ┌────────────────────────────────────────────────┐ │
│  │ Mutually excluding for at least one of the one or more blocks a │──── S502a
│  │ use of a transform-based distortion metric and a transform-less │
│  │                  residual coding                │ │
│  └────────────────────────────────────────────────┘ │
└────────────────────────────────────────────────────┘
                          │
                          ▼
┌ ─ ─ ─ ─ ─ ─ ─ ─ ─ ─ ─ ─ ─ ─ ─ ─ ─ ─ ─ ─ ─ ─ ─ ─ ─ ┐
   Including into the data stream one or more flags    ──────── S504
└ ─ ─ ─ ─ ─ ─ ─ ─ ─ ─ ─ ─ ─ ─ ─ ─ ─ ─ ─ ─ ─ ─ ─ ─ ─ ┘
```

Fig. 13

```
┌─────────────────────────────────────────────────────────┐
│                                                          │
│   ┌─────────────────────────────────────────────────┐   │
│   │   Processing module for mutually excluding use of a │   │
│   │   transform-based distortion metric and a transform-less │   │
│   │          residual coding              402   │   │
│   └─────────────────────────────────────────────────┘   │
│                                                          │
│                                              400         │
└─────────────────────────────────────────────────────────┘
```

Fig. 14

Fig. 15

| Decoder module | 502 |

| Prediction module | 504 |

500

Fig. 16

| Encoder module | 602 |

| Prediction module | 604 |

600

Fig. 17

900

901
computing
unit

902
ROM

903
RAM

904

905
I/O interface

906
input unit

907
output unit

908
storage
unit

909
communica-
tion unit

Fig. 18

Europäisches Patentamt

European Patent Office

Office européen des brevets

# EUROPEAN SEARCH REPORT

**Application Number**

EP 24 31 5324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAO JIAN ET AL: "Intra Block Copy Mirror Mode for Screen Content Coding in Versatile Video Coding", IEEE ACCESS, IEEE, USA, vol. 9, 19 February 2021 (2021-02-19), pages 31390-31400, XP011840282, DOI: 10.1109/ACCESS.2021.3060448 [retrieved on 2021-02-25] * page 1 - page 11 * | 1 | INV. H04N19/12 H04N19/157 H04N19/176 H04N19/46 H04N19/61 H04N19/70 |
| X | US 2022/159295 A1 (XIU XIAOYU [US] ET AL) 19 May 2022 (2022-05-19) * paragraph [0001] - paragraph [0125] * * figures 1-19 * | 1 | |
| X | XIU (KWAI) X ET AL: "CE8-related: Encoder improvements on IBC search", 14. JVET MEETING; 20190319 - 20190327; GENEVA; (THE JOINT VIDEO EXPLORATION TEAM OF ISO/IEC JTC1/SC29/WG11 AND ITU-T SG.16 ), , no. JVET-N0329 13 March 2019 (2019-03-13), XP030202974, Retrieved from the Internet: URL:http://phenix.int-evry.fr/jvet/doc_end _user/documents/14_Geneva/wg11/JVET-N0329- v1.zip JVET-N0329.docx [retrieved on 2019-03-13] * page 1 - page 4 * | 1 | TECHNICAL FIELDS SEARCHED (IPC)<br><br>H04N |

The present search report has been drawn up for all claims

| Place of search | Date of completion of the search | Examiner |
|---|---|---|
| Munich | 12 December 2024 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5324

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | | Publication date |
|---|---|---|---|---|
| US 2022159295 A1 | 19-05-2022 | CN | 113615195 A | 05-11-2021 |
| | | EP | 3925223 A1 | 22-12-2021 |
| | | US | 2022159295 A1 | 19-05-2022 |
| | | WO | 2020185964 A1 | 17-09-2020 |

EPO FORM P0459

For more details about this annex : see Official Journal of the European Patent Office, No. 12/82